# EUROPÄISCHE PATENTANMELDUNG

(11) **EP 1 229 265 A1**
(43) Veröffentlichungstag der Anmeldung: **07.08.2002**
(21) Anmeldenummer: 01102314.0
(22) Anmeldetag: 01.02.2001
(51) Int. Cl.: F16D 65/12

(54) **Bremsscheibe**

(71) Anmelder: Visteon Global Technologies, Inc., Dearborn, Michigan 48126 (US)
(72) Erfinder: Schaus, Marion, 47829 Krefeld (DE); Wallentin, Markus, 41253 Göteborg (SE); Svensson, Thomas, 50939 Köln (DE)
(74) Vertreter: Bauer, Wulf, Dr.

(57) **Zusammenfassung**

Die Erfindung betrifft eine Bremsscheibe für Scheibenbremsen von Kraftfahrzeugen mit einem Scheibentopf (1) sowie mindestens einem mit dem Scheibentopf (1) in einem Verbindungsbereich verbundenen Reibring (2). Der Verbindungsbereich weist radial erstreckende Verbindungselemente (3) und sich radial erstreckende Verbindungsausnehmungen (6) auf. Der Querschnitt der Verbindungselemente (3) und der Querschnitt der Verbindungsausnehmungen (6) quer zu ihrer radialen Länge (11) sind so aneinander angepasst, dass Berührflächen (8) zwischen den Verbindungselementen (3) und Verbindungsausnehmungen (6) vorliegen. Die Verbindungselemente (3) können in Richtung ihrer radialen Länge (11) in den Verbindungsausnehmungen (6) gleiten. Die Verbindungselemente (3) sind realisiert durch einen formgebenden Vorgang, bei dem die Verbindungsausnehmungen (6) als Form für den formgebenden Vorgang verwendet werden oder umgekehrt. Die Verbindungselemente (3) haben eine radiale Länge, die kleiner ist als die größte Abmessung des Querschnitts der Verbindungselemente (3). Die Verbindungselemente (3) sind in einer Axialebene gesehen durch eine bogenförmige Kuppe begrenzt.

## Beschreibung

Die Erfindung betrifft eine Bremsscheibe für Kraftfahrzeuge, insbesondere eine Verbundguss-Bremsscheibe, bestehend aus einem Scheibentopf und mindestens einem damit verbundenen Reibring, die über einen Verbindungsbereich miteinander verbunden sind, nach dem Oberbegriff des Patentanspruchs 1.

Eine derartige Bremsscheibe ist aus EP 77 137 A1 vorbekannt. Bei dieser vorbekannten Bremsscheibe ist der Reibring ein Gussteil aus Eisen, der Scheibentopf ist aus einer Aluminiumlegierung hergestellt. Beide Teile sind im Verbundguss erstellt. Aufgrund des Verbindungsbereichs ist eine thermische Erwärmung des Reibrings abgekoppelt vom Scheibentopf. Dadurch werden schirmartige Verformungen des Reibrings vermieden.

Beispielsweise aus der DE 27 28 335 A1 ist bekannt, dass zur Erzielung optimaler Eigenschaften in Bezug auf Bremsverhalten und Standfestigkeit eine zweiteilige Ausführung von Bremsscheiben in Form eines Scheibentopfs und eines damit verbundenen Reibrings vorteilhaft ist. Durch die zweiteilige Ausführung können die Materialien von Scheibentopf und Reibring optimal an die gegebenen Anforderungen wie z.B. Reibverhalten, thermische Eigenschaften sowie Festigkeit angepasst werden.

Eine zweiteilige Ausführung einer Bremsscheibe führt jedoch zu dem Problem einer dauerhaft festen Verbindung zwischen Scheibentopf und Reibring. Aus der DE 199 31 149 A1 ist eine zweiteilige Verbundguss-Bremsscheibe bekannt, in der am äußeren Umfang des Scheibentopfs zapfenartige Verbindungselemente ausgebildet sind, die in komplementär ausgebildete kammerartige Verbindungsausnehmungen eingreifen, welche am Innenumfang des Reibrings ausgebildet sind. Dabei bilden die zapfenartigen Verbindungselemente einen Hinterschnitt in den Verbindungsausnehmungen, so dass sich ein wirkungsvoller Formschluss und somit eine feste Verbindung zwischen Scheibentopf und Reibring ergibt. Weiterhin ist die Verwendung unterschiedlicher Materialien für Scheibentopf und Reibring möglich.

Zum Stand der Technik wird zusätzlich zur EP 77 137 A1 weiterhin auf US-5,109,906; US-5,823,303 und DE-A-2 110 482 verwiesen. Bei diesen vorbekannten Bremsscheiben werden thermisch bedingte Unterschiede in Radialrichtung gut aufgenommen. Im Betrieb kann der Reibring sehr heiß werden, er kann Temperaturen von 600° C und darüber erreichen. Diese Temperaturen werden praktisch nicht auf den Scheibentopf weitergeleitet, da der Verbindungsbereich eine Wärmeleitung stark behindert, jedenfalls keinen großen Querschnitt für eine Wärmeleitung bietet.

Bei einem Bremsvorgang werden relativ rasch so hohe Temperaturen erzeugt, dass sich der Reibring nicht gleichmäßig erwärmt. Neben einer radialen Deformation kommt es daher zu Deformationen auch in Axialrichtung. Diese belasten die Verbindungselemente stark. Gerade radial längere Verbindungselemente, die über eine größere Strecke in Verbindungsausnehmungen hineinzuragen, können verbiegen, brechen oder anderweitig beschädigt werden.

Darüber hinaus hat es sich als schwierig herausgestellt, Scheibentopf und Reibring im Gussverfahren aus Eisen herzustellen und dabei im Verbundguss zu arbeiten. Bei der Herstellung kommt es immer wieder zu einer Verbindung zwischen den fingerartigen Verbindungselementen und den Verbindungsausnehmungen. Damit sich später beide relativ gegeneinander bewegen können, muss aber eine Verbindung auf jeden Fall verhindert werden.

Hier setzt nun die Erfindung ein. Sie hat es sich zur Aufgabe gemacht, die Bremsscheiben der eingangsgenannten Art dahingehend weiter zu bilden, dass unter Beibehaltung der Vorteile die Belastung des Verbindungsbereich durch thermische Verformung vermindert wird.

Gelöst wird diese Aufgabe durch eine Bremsscheibe mit den Merkmalen des Anspruchs 1.

Eine erfindungsgemässe Bremsscheibe besteht aus einem Scheibentopf sowie mindestens einem mit dem Scheibentopf verbundenen Reibring. Der Scheibentopf weist an seinem Außenumfang sich radial nach außen erstreckende Verbindungselemente auf. Am Innenumfang des Reibrings sind sich radial erstreckende Verbindungsausnehmungen vorgesehenen, in die die Verbindungselemente eingreifen. In einer alternativen Ausführung sind am Außenumfang des Scheibentopfs sich radial nach innen erstreckende Verbindungsausnehmungen vorgesehen, in die sich vom Innenumfang radial zum Zentrum der Bremsscheibe hin erstreckende Verbindungselemente eingreifen.

Der Querschnitt der Verbindungselemente und der Verbindungsausnehmungen quer zur ihrer radialen Länge sind so aneinander angepasst, dass sich im bestimmungsgemäß belasteten Zustand der Bremsscheibe zumindest linienhafte, vorzugsweise aber flächenhafte Berührflächen zwischen Verbindungselementen und Verbindungsausnehmungen ausbilden. Hierdurch wird eine sichere Drehmomentübertragung zwischen Reibring und Scheibentopf im Betrieb der Bremsscheibe erzielt. Die Berührflächen liegen sowohl im unbelasteten Zustand der Bremsscheibe als auch bei Belastung der Bremsscheibe durch einen Bremsvorgang vor.

Weiterhin sind die im Eingriff befindlichen Verbindungselemente in Richtung ihrer radialen Länge, die in radialer Richtung verläuft, in den Verbindungsausnehmungen verschieblich. Dies kann durch eine entsprechende Ausgestaltung der Berührflächen erzielt werden. Hierzu verlaufen die Berührflächen vorzugsweise im wesentlichen in radialer Richtung, so dass bei einer Relativbewegung der Verbindungselemente in den Verbindungsausnehmungen eine gleitende Bewegung in radialer Richtung längs der Berührlinien/flächen möglich ist. Insbesondere sollte hierzu der Winkel der Selbsthemmung der gleitenden Bewegung, der bei typ. 10° liegt, nicht überschritten werden. Insgesamt wird hierdurch erreicht, dass sich ein erwärmter Reibring thermisch ausdehnen kann, ohne dass hieraus eine mechanische Belastung der aus Verbindungselementen und zugehörigen Verbindungsausnehmungen bestehenden Verbindung von Reibring und Scheibentopf und damit der gesamten Bremsscheibe resultiert.

Aus der thermischen Ausdehnung des Reibrings resultiert i.a. eine Vergrösserung seines Innendurchmessers, wodurch sich der Durchmesser des Kreises, auf dem die Verbindungsausnehmungen angeordnet sind, ebenfalls vergrössert. Da sich der Durchmesser des Kreises, auf dem die Verbindungselemente angeordnet sind, aufgrund der unterschiedlichen Materialeigenschaften und der niedrigeren thermischen Belastung hiervon verschieden verändert, hat dies eine veränderte Eingriffstiefe der Verbindungselemente in den zugehörigen Ausnehmungen zur Folge. Aufgrund der Verschieblichkeit der in den Verbindungsausnehmungen im Eingriff befindlichen Verbindungselemente resultiert hieraus jedoch kein Spannungsaufbau in der Bremsscheibe. Die erfindungsgemäße Bremsscheibe verwirklicht somit eine mechanische Entkopplung von Reibring und Scheibentopf dergestalt, dass im Betrieb der Bremsscheibe auftretende thermische Belastungen nicht zu unerwünschten Verformungen der Bremsscheibe führen können. Hierdurch wird eine deutliche Erhöhung der Lebensdauer sowohl der Bremsscheibe als auch der Bremsklötze erzielt.

Aufgrund der relativ kurzen Verbindungselemente, die nur einige Millimeter fingerartig radial nach innen oder außen wegstehen, ist die mechanische Belastung der Verbindungselemente gering, denn die Hebelarme sind kurz. Weiterhin ist beim Verbundguss sicher gestellt, dass eingebrachte Wärme relativ gut und über einen großen Querschnitt abfließen kann. Dadurch wird entgegengewirkt, dass sich das Material soweit erhitzen kann, dass es wieder flüssig oder zumindest nahezu flüssig wird. Gerade aufgrund der relativ kurzen Verbindungselemente wird die Herstellung im Verbundguss erleichtert.

Dies ist unabhängig von der Art des Vorgehens. Wenn man zunächst den Scheibentopf mit Verbindungselementen herstellt und nachträglich den Reibring angießt, so dass die bereits erstellten Verbindungselemente die noch zu formenden Verbindungsausnehmungen definieren und begrenzen, wird eine gute formmässige Anpassung auch nach dem Erkalten erzielt, denn beim Abkühlen zieht sich der Reibring zusammen, bleibt also in Kontakt mit den Verbindungselementen. Es ist daher vorteilhaft, zunächst das Innenteil herzustellen und danach mit seiner Hilfe das Außenteil, also den Reibring. Dabei ist es vorteilhaft, wenn der Scheibentopf als Innenteil die nach außen gerichteten Verbindungselemente von Hause aus hat. In einer Alternative kann der Scheibentopf auch mit den Verbindungsausnehmungen versehen sein und werden dann die Verbindungselemente hergestellt, wenn in einem zweiten Schritt der Reibring im Gussverfahren hergestellt wird.

Die Erfindung eignet sich aber auch für andere Verfahren der Herstellung. Sie eignet sich insbesondere für eine Herstellung der Verbindungselemente unter Einsatz der schon zuvor erstellten Verbindungsausnehmungen als Form. Günstig sind hier insbesondere Kaltverformungsverfahren, wie Fließpressen, bei denen ausgehend von einem Ausgangsrohling des Scheibentopfes, der zunächst noch keine Verbindungselemente hat, Verbindungselemente ausgebildet werden durch Einpressen des Materials in die bereits vorhandenen Verbindungsausnehmungen des Reibrings. Auch hier kann in anderer Reihenfolge gearbeitet werden, also beispielsweise an einem Ausgangsrohling des Scheibentopfes Finger nach innen erstellt und gepresst werden, die in die bereits fertiggestellten Verbindungsausnehmungen hineingepresst werden und somit ihre Form bekommen. Der erstgenannte Ablauf hat sich allerdings als günstig herausgestellt. Beim Fließpressen ist es günstig, zunächst die Verbindungsausnehmungen herzustellen.

Aufgrund der bogenförmigen Kuppe kann der Reibring etwas in axialer Richtung gegenüber dem Scheibentopf kippen bzw. sich bewegen, ohne dass eine derartige Bewegung sofort auf die Verbindungselemente einwirkt. Es wird also ein zusätzlicher Freiheitsgrad geschaffen. Der Reibring kann sich je nach unterschiedlicher thermischer Belastung und daraus folgender Ausdehnung freier gegenüber dem Scheibentopf bewegen als nach dem Stand der Technik, ohne dass es zu einer allzu starken mechanischen Belastung der Verbindungselemente kommt.

Dabei hat es sich als besonders günstig herausgestellt, die Kuppe der Verbindungselemente durch einen Halbkreis zu begrenzen. Dadurch wird eine deutlich axiale Bewegung der Bremsscheibe möglich, ohne dass es zu Spannungen in den Verbindungselementen kommt. In einer besonderen Weiterbildung stellt dieser Halbkreis praktisch die gesamte Berührungslinie mit der Verbindungsausnehmung dar. Anders ausgedrückt ist die radiale Länge des Verbindungselementes praktisch nicht viel größer als der Radius des Halbkreises. Dies führt zu einer weiteren Verringerung axialer Spannungen bei ungleichmäßigen Verformungen oder bei einer schirmartigen Verformung des Reibrings.

Die im Betrieb tatsächlich auftretenden radialen Verschiebungen zwischen Reibring und Scheibentopf liegen typischerweise bei maximal 0,4 mm. Demgemäss genügt eine radiale Länge der Verbindungselemente von mehreren Millimetern, beispielsweise 4 mm oder 6 mm, um auch bei größter Temperaturdifferenz zwischen Reibring und Scheibentopf eine sichere mechanische Verbindung und damit Übertragung eines Drehmomentes zu erreichen. Derartig kurze Verbindungselemente lassen sich im Verbundgussverfahren gut herstellen. Aufgrund der abgerundeten bzw. bogenförmigen Kuppe wird eine Verbindung zwischen der Verbindungsausnehmungen und den fingerartigen Verbindungselementen während des Verbundgusses entgegengewirkt. Man stellt vielmehr fest, dass beide mit intakter Gusshaut aneinander liegen, ohne miteinander verbunden zu sein.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden erläutert werden. In dieser Zeichnung zeigen:
- FIG. 1:: Eine Ansicht in Axialrichtung auf eine erfindungsgemäße Bremsscheibe,
- FIG. 2:: einen Schnitt längs der Schnittlinie A-A in FIG. 1 durch die dort gezeigte Bremsscheibe,
- FIG. 3:: eine Ausschnittvergrößerung aus FIG. 2 im Zustand eines sehr heißen Reibrings und eines normal temperierten Scheibentopfes, also bei höchster im praktischen Betrieb auftretender Temperaturdifferenz,
- FIG.4:: einen Schnitt längs einer Radialebene C-C neben einem im Eingriff befindlichen Verbindungselement gemäß FIG. 4,
- FIG. 5:: einen Schnitt längs der Linie B-B in FIG. 3,

- FIG. 6:: einen Schnitt mit einer Schnittlinie wie in FIG. 5, jedoch in einer anderen Ausführung und
- FIG. 7:: eine schnittbildliche Ansicht in Axialrichtung des Verbindungselementes in der Ausführung gemäß FIG. 6.

In den Figuren ist mit R die Radialrichtung, mit A die Axialrichtung und mit U die Umfangs- bzw. Rotationsrichtung bezeichnet.

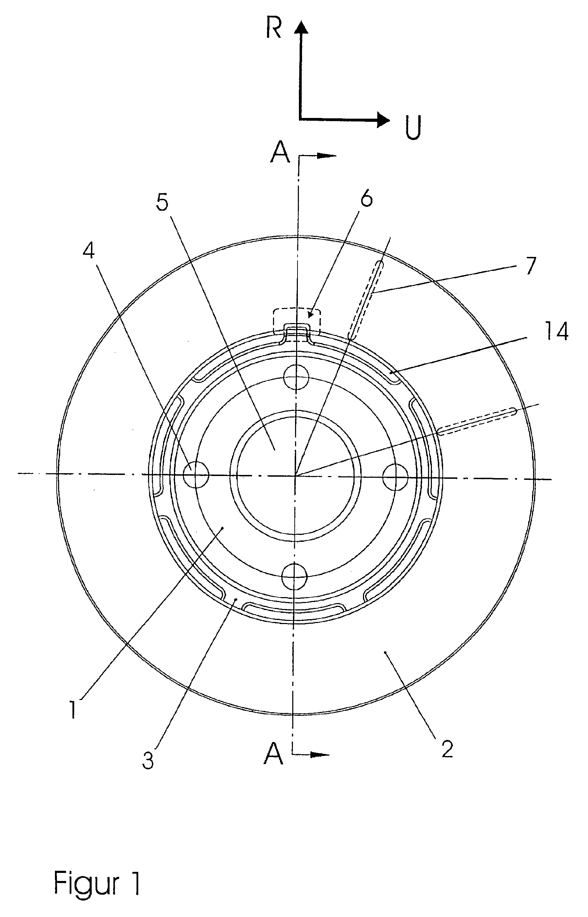

Figur 1 zeigt eine erfindungsgemäße Bremsscheibe in Aufsicht. Diese besteht aus einem zentralen Scheibentopf 1, der an seinem äußeren Umfang eine ungerade Anzahl von Verbindungselementen 3 ausbildet, die im gezeigten Beispiel äquidistant auf dem Umfang verteilt sind. Eine solche Anzahl und Anordnung ist vorteilhaft, jedoch nicht zwingend erforderlich.

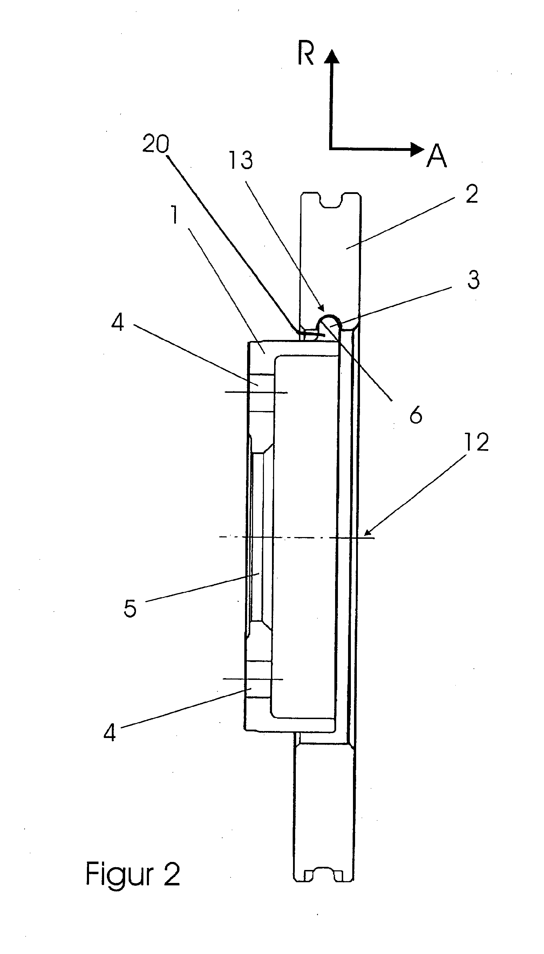

Der Scheibentopf 1 weist eine zentrale Bohrung 5 zur Aufnahme einer Welle sowie Befestigungslöcher 4 zur Verschraubung mit einer (nicht gezeigten) Radnabe auf. Die Rotationsachse 12 der Bremsscheibe ist aus Fig. 2 ersichtlich.

Vom Scheibentopf 1 stehen in einer Radialebene radial nach außen Verbindungselemente 3 vor. Sie erstrecken sich über acht bis zwanzig Grad Bogenwinkel, insbesondere über etwa 14° Bogenwinkel. Sie sind einstückig mit dem Scheibentopf 3 verbunden.

Die Verbindungselemente 3 des Scheibentopfs 1 greifen in allen Betriebszuständen der Bremsscheibe in Verbindungsausnehmungen 6 des Reibrings 2 ein, die an korrespondierenden Stellen an seinem inneren Umfang ausgebildet sind. Hierdurch sind der Scheibentopf 1 und der Reibring 2 unverlierbar miteinander verbunden. Darüber hinaus stellt die Verbindung über Verbindungselemente 3 und -ausnehmungen 6 die einzige mechanische Verbindung zwischen Scheibentopf 1 und Reibring 2 dar. Insbesondere wird ein sonstiger mechanischer Kontakt zwischen Scheibentopf 1 und Reibring 2 durch entsprechend größere Dimensionierung des Innendurchmessers des Reibrings 2 als des Außendurchmessers des Scheibentopfs 1 ausgeschlossen.

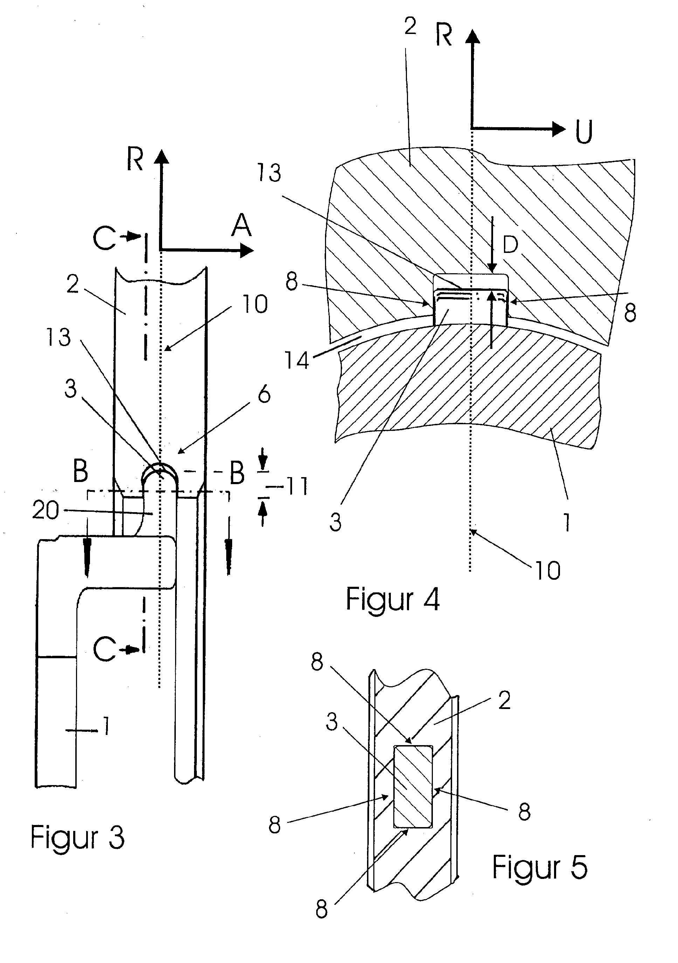

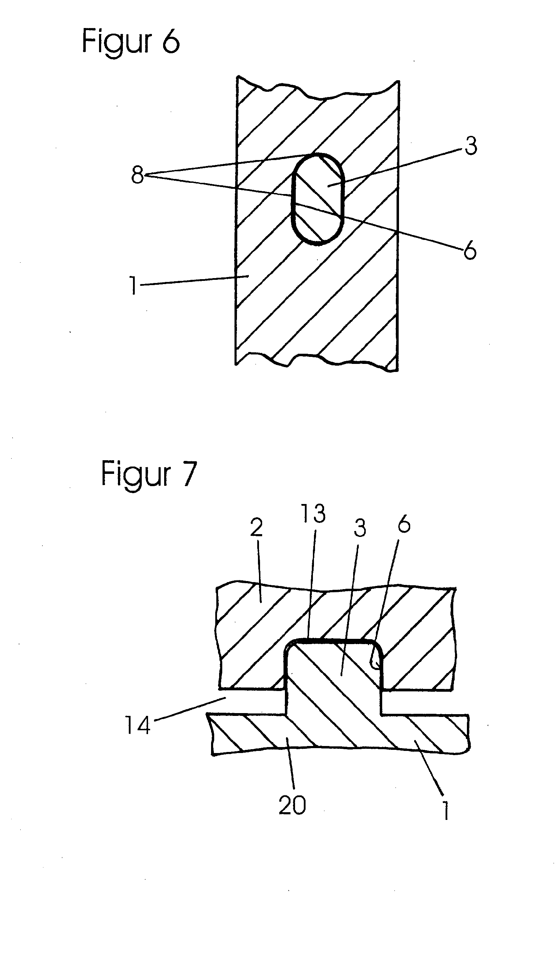

Der Reibring 2 kann jede für Bremsscheiben gewünschte Formgebung aufweisen. So können beispielsweise Belüftungslöcher vorgesehen sein. Weiterhin kann der Reibring aus zwei axial versetzt angeordneten Scheiben aufgebaut sein, die über Stege 7 verbunden sind. Derartige doppelte Reibringe sind aus der DE 27 28 335 A1 bekannt. Weiterhin können auch andere zweiteilige Ausführungen von Reibringen 2 vorteilhaft sein. So können Reibringe 2 zum Einsatz kommen, die in der Radialebene, z. B. der in Figur 3 gepunktet dargestellten Radialebene oder der radialen Schnittebene von Figur 4 zweigeteilt und auf geeignete Weise z.B. durch Verschraubung miteinander verbunden sind. Besondere Vorteile ergeben sich, wenn die Verbindungsausnehmungen 6 in nur einem Teil eines derartigen zweiteiligen Reibrings 2 ausgebildet sind und der zweite Teil des Reibrings 2 eine Art "Deckel" ausbildet, der die Verbindungsausnehmungen 2 abschließt. Eine solche Ausführung bietet besondere Vorteile einerseits hinsichtlich der Fertigung der Bremsscheibe - eine Fertigung z.B. im Verbundgussverfahren kann vermieden werden - andererseits auch hinsichtlich der Wartungsfreundlichkeit, da am Ende der Lebensdauer des Reibrings 2 dieser alleine ausgetauscht werden kann, wohingegen der wesentlich weniger verschleißanfällige Scheibentopf 1 weiter verwendet werden kann.

Aus dem in Figur 2 gezeigten Schnitt längs der Schnittlinie A - A ist eine erfindungsgemäße Bremsscheibe mit einteiligem Reibring in Seitenansicht ersichtlich. Insbesondere ist ein in einer Verbindungsausnehmung 6 im Eingriff befindliches Verbindungselement 3 gezeigt. Deutlich sichtbar ist ein zwischen Scheibentopf 1 und Reibring ausgebildeter ringförmiger Spalt 14. Die radiale Abmessung dieses Spaltes 14 kann klein gehalten werden. Dadurch wird eine Basis 20 jedes Verbindungselementes 3 möglichst kurz. Diese Basis 20 überbrückt den Spalt 14 bis hin zum Beginn der Verbindungselemente 3. Die Verbindungselemente beginnen an der Eintrittsöffung der jeweiligen Verbindungsausnehmung 6. Je kürzer die Basen 20 sind, umso geringer sind die mechanischen Belastungen der Verbindungselemente 3.

Wie insbesondere aus FIG. 2 ersichtlich ist, haben die Verbindungselemente 3 eine relativ kurze radiale Länge 11. Die Verbindungselemente 3 sind in der Axialebene, die FIG. 2 zeigt, im wesentlichen Halbkreise. Diese Halbkreise bilden eine bogenförmige Kuppe 13, die praktisch die gesamte Berührfläche mit den Verbindungsausnehmungen 6 darstellt.

Während die Figuren 1 und 2 den Zustand der Bremsscheibe in Normaltemperatur zeigen, beziehen sich die Figuren 3 bis 5 auf einen Zustand mit extremen Temperaturunterschieden zwischen einem sehr heißen Reibring 2 und einem kalten Scheibentopf 1. Der heiße Reibring 2 dehnt sich radial nach außen aus. Der Spalt 14 vergrößert sich. Insbesondere aber kommt es nun zu einem Luftspalt zwischen der Kuppe 13 der Verbindungselemente 3 und einer ihr angepassten Innenrundung der Verbindungsausnehmungen 6. Ein derartiger Luftspalt ist im Normalzustand nicht vorhanden, wie insbesondere FIG.2 zeigt. Die radiale Abmessung des Luftspalts liegt typischerweise bei 0,4 mm für den Fall der angesetzten Temperaturen. Zu erkennen ist, dass auch bei diesem Zustand die Verbindungselemente 3 ausreichend tief in die Verbindungsausnehmungen 6 hineinragen, so dass das Drehmoment, das beim Bremsvorgang auf den Reibring 2 ausgeübt wird, nach wie vor spielfrei auf den Scheibentopf 1 übertragen wird.

In FIG. 4 ist mit D die im betrachteten thermischen Zustand auftretenden Spaltbreite eines Luftspaltes eingezeichnet. Die Berührflächen 8 sind so ausreichend dimensioniert und ausgebildet, dass auch die höchsten, im praktischen Bremsbetrieb auftretenden Kräfte übertragen werden können.

FIG. 5 zeigt einen Querschnitt quer zur Radialrichtung R. Dieser Querschnitt hat eine längliche Form. Eine längere Querschnittsabmessung in Umfangsrichtung ist etwa doppelt so groß wie eine kürzere Querschnittsabmessung in Axialrichtung. Zu erkennen ist die formmässige Anpassung zwischen Verbindungselement 3 und der Verbindungsausnehmung 6 im Reibring 2.

Als vorteilhaft hat es sich bei der Herstellung der Verbindungselemente 3 erwiesen, diesen allseitig möglichst große Krümmungsradien zu verleihen. Sie sollten also keine Ecken oder Kanten haben, die eng gekrümmt sind. FIG. 3 zeigt eine weiche Krümmung in der Axialebene. Eine ähnliche weiche Krümmung ist auch vorteilhaft in einer Radialebene. Hierzu zeigen die Figuren 6 und 7 eine Ausführung, bei denen die Kantenradien und Eckradien so groß wie möglich gewählt sind, ohne die Übertragung eines Drehmomentes zu beeinträchtigen. Für die Übertragung eines Drehmomentes sind ausreichende Schubflächen in Umfangsrichtung notwendig. Diese müssen auch bei den höchsten thermischen Belastungen, also den größten Temperaturunterschieden vorliegen.

Wie FIG. 6 zeigt, ist der Querschnitt nun ein längliches Oval. Derartige Querschnittsformen lassen sich im Verbundguss günstiger herstellen als Querschnittsformen mit kleineren Radien. In der Axialebene sieht dieses Verbindungselement ebenfalls weichere Abrundungen vor, wie aus FIG. 7 hervorgeht.

Als sehr vorteilhaft hat es sich erwiesen, eine ungeradzahlige Anzahl von Verbindungselementen 3 vorzusehen. Auf diese Weise werden stehende akustische Wellen im Reibring 3 und/oder im Scheibentopf 1 besser unterdrückt als bei geradzahliger Anzahl, wo es zu Resonanzen kommen könnte.

In der Ausführung nach den Figuren 6 und 7 springen die Verbindungselemente 3 vom Reibring 1 radial nach innen vor und sind die Verbindungsausnehmungen 6 am Scheibentopf 1 ausgebildet und radial nach außen offen.

Die Verbindungselemente 3 weisen über eine vorgegebene Länge einen konstanten Querschnitt auf. Einen hieran angepassten Querschnitt weisen auch die Verbindungsausnehmungen 6 auf eine entsprechende Länge auf. Dabei sind die Abmessungen von Scheibentopf 1 und Reibring 2 so aneinander angepasst, dass sich die Verbindungselemente 3 in allen Betriebszuständen im Eingriff in den Verbindungsausnehmungen 6 befinden und dabei über eine Anlagelänge 15 Kontaktflächen 8 ausbilden. Die Anlagelänge 15 weist dabei mindestens eine bestimmte Länge auf, die so groß gewählt ist, dass in allen Betriebszuständen eine sichere und ermüdungsfreie Übertragung der Kräfte zwischen Reibring 2 und Scheibentopf 1 gewährleistet ist. Die hierzu erforderliche Anlagelänge hängt von der konkreten Ausgestaltung der Bremsscheibe und ihrem Einsatzzweck ab, wird aber in der Regel im Bereich von einigen Millimetern liegen.

Die Herstellung der Bremsscheibe der Ausführungsbeispiele kann z.B. im Verbundgussverfahren erfolgen. Hierbei können beispielsweise die Verbindungselemente 3 in die Verbindungsausnehmungen 6 eingegossen werden. Im gleichen Arbeitsgang wird auch der Scheibentopf 1 gegossen. Alternativ ist auch ein Angießen des Reibrings 2 an den Scheibentopf 1 mit bereits ausgebildeten Verbindungselementen 3 möglich. Entsprechende Verfahren sind u.a. der deutschen Offenlegungsschrift 2 263 643 zu entnehmen. Auch der DE 199 31 140 A1 sind entsprechende Hinweise zur Herstellung der erfindungsgemäßen Bremsscheibe im Verbundgussverfahren zu entnehmen. Der Offenbarungsgehalt beider Veröffentlichungen wird hiermit vollumfänglich zum Gegenstand dieser Anmeldung gemacht.

Grundsätzlich ist es möglich, Reibring 2 und Scheibentopf 1 einer erfindungsgemäßen Bremsscheibe aus verschiedenen Materialien zu fertigen, dies ist aber nicht unbedingt erforderlich. Insbesondere ist eine weitere Optimierung der Eigenschaften der Bremsscheibe durch separate Optimierung der Materialparameter von Reibring 2 und Scheibentopf 1 möglich. So bietet sich beispielsweise die gezielte Verwendung von globularem oder laminarem Grauguss oder Keramik usw. für den Reibring 2 sowie von Stahl, Aluminium oder Verbundwerkstoffen usw. für den Scheibentopf 1 an. Auch hierzu wird auf die Ausführungen in der DE 199 31 140 verwiesen.

Es ist offensichtlich, dass das vorliegende Konzept auch auf Bremsscheiben verallgemeinert werden kann, welche einen abweichenden Aufbau des Scheibentopfes 1 und/oder mehrere Reibringe 2 aufweisen.Auch eine Anbringung der Verbindungselemente 3 oder Verbindungsausnehmungen 6 auf oder in zusätzlichen Verbindungsteilen wie z.B. im Sinne der aus der DE 27 28 335 A1 bekannten Konstruktion ist selbstverständlich möglich und Gegenstand der vorliegenden Anmeldung.

## Patentansprüche

1. Bremsscheibe für Scheibenbremsen von Kraftfahrzeugen mit einem Scheibentopf (1) sowie mindestens einem mit dem Scheibentopf (1) in einem Verbindungsbereich verbundenen Reibring (2), wobei der Verbindungsbereich sich radial erstreckende Verbindungselemente (3) und sich radial erstreckende Verbindungsausnehmungen (6) aufweist, die Verbindungselemente (3) sich in den Verbindungsausnehmungen (6) befinden, der Querschnitt der Verbindungselemente (3) und der Querschnitt der Verbindungsausnehmungen (6) quer zu ihrer sich in Radialrichtung erstreckenden radialen Länge (11) so aneinander angepasst sind, dass Berührflächen (8) zwischen den Verbindungselementen (3) und Verbindungsausnehmungen (6) vorliegen, weiterhin die Verbindungselemente (3) in Richtung ihrer radialen Länge (11) in den Verbindungsausnehmungen (6) gleiten können und die Verbindungselemente (3) realisiert sind durch einen formgebenden Vorgang, bei dem die Verbindungsausnehmungen (6) als Form für den formgebenden Vorgang verwendet werden oder umgekehrt die Verbindungsausnehmungen (6) realisiert sind durch einen formgebenden Vorgang, bei dem die Verbindungselemente (3) als Form für den formgebenden Vorgang verwendet werden, **dadurch gekennzeichnet, dass** die Verbindungselemente (3) eine radiale Länge haben, die kleiner ist als die grösste Abmessung des Querschnitts der Verbindungselemente (3), und dass die Verbindungselemente (3) in einer Axialebene gesehen durch eine bogenförmige Kuppe begrenzt sind.

2. Bremsscheibe gemäß Anspruch 1, **dadurch gekennzeichnet, dass** der Scheibentopf (1) und der Reibring (2) im Verbundgussverfahren hergestellt sind.

3. Bremsscheibe gemäß Anspruch 2, **dadurch gekennzeichnet, dass** die Verbindungselemente (3) und die Verbindungsausnehmungen (6) eine intakte Giesshaut aufweisen.

4. Bremsscheibe gemäß Anspruch 1, **dadurch gekennzeichnet, dass** der formgebende Vorgang eine Kaltverformung, ein Fließpressen, oder dergl. eines Rohlings für den Scheibentopf (1) unter Verwendung des bereits hergestellten Reibrings (2) als Form ist, oder umgekehrt.

5. Bremsscheibe gemäß Anspruch 1, **dadurch gekennzeichnet, dass** die Verbindungselemente (3) in Radialrichtung relativ kurz, vorzugsweise so kurz wie möglich ausgebildet sind.

6. Bremsscheibe gemäß Anspruch 1, **dadurch gekennzeichnet, dass** bei Normaltemperatur von Scheibentopf (1) und Reibring (2) in einer Axialebene gesehen die Kuppe der Verbindungselemente (3) an einer Innenrundung der Verbindungsausnehmungen (6) anliegt.

7. Bremsscheibe gemäß Anspruch 1, **dadurch gekennzeichnet, dass** die Kuppe der Verbindungselemente (3) in einer Axialebene gesehen durch einen Halbkreis begrenzt ist.

8. Bremsscheibe gemäß Anspruch 7, **dadurch gekennzeichnet, dass** die radiale Länge der Verbindungselemente (3) nicht wesentlich grösser ist als der Radius des Halbkreises, insbesondere maximal 1,5 mal, vorzugsweise maximal 1,2 mal grösser ist als der Radius des Halbkreises.

9. Bremsscheibe gemäß Anspruch 1, **dadurch gekennzeichnet, dass** die Verbindungselemente (3) über eine Basis mit einem Hauptkörper des Scheibentopfes (1) verbunden sind, dass diese Basis nicht im Eingriff in den Verbindungsausnehmungen (6) ist und dass die radiale Länge der Basis möglichst klein ist, insbesondere nicht grösser als 10 mm, vorzugsweise als 6 mm ist.

10. Bremsscheibe gemäß Anspruch 1, **dadurch gekennzeichnet, dass** die Verbindungselemente (3) quer zur Radialrichtung einen länglichen Querschnitt aufweisen, wobei eine längere Querschnittsabmessung in Umfangsrichtung verläuft und eine kürzere Querschnittsabmessung in Axialrichtung verläuft und die längere Querschnittsabmessung mindestens 1,5 mal, vorzugsweise mindestens zweimal so gross ist wie die kürzere Querschnittsabmessung.
